Europäisches Patentamt

European Patent Office

Office européen des brevets

(19)

(11) Publication number: **0 256 533 B1**

## EUROPEAN PATENT SPECIFICATION

(12)

(45) Date of publication of patent specification: **28.10.92**   (51) Int. Cl.5: **C01B 21/40**

(21) Application number: **87111782.6**

(22) Date of filing: **13.08.87**

(54) Method and apparatus for reduction of the nitrogen oxide content in effluent gases from absorption column for manufacture of nitric acid.

(30) Priority: **13.08.86 NO 863274**

(43) Date of publication of application:
**24.02.88 Bulletin 88/08**

(45) Publication of the grant of the patent:
**28.10.92 Bulletin 92/44**

(84) Designated Contracting States:
**AT DE ES FR GB NL**

(56) References cited:
**EP-A- 0 047 191**
**FR-A- 1 255 373**
**GB-A- 527 037**

**CHEMICAL PROCESS REVIEWS, no. 30, 1969,
pages 179-183, New York, US; Dr. ROBERT
POWELL: "Column with plates spaced at in-
creasing intervals in the direction of gas
flow"**

(73) Proprietor: **NORSK HYDRO A.S.
Bygdoy Allé 2
N-0257 Oslo 2(NO)**

(72) Inventor: **Kongshaug, Gunnar
Borgetun 8
N-3900 Porsgrunn(NO)**
Inventor: **Mejdell, Glor Thorvald
Hesteskoen 1
N-3900 Porsgrunn(NO)**
Inventor: **Mathisen, Knut
Blab rsvingen 3
N-3900 Porsgrunn(NO)**

(74) Representative: **Huber, Bernhard, Dipl.-Chem.
et al
Patentanwälte H. Weickmann, Dr. K. Fincke
F.A. Weickmann, B. Huber Dr. H. Liska, Dr. J.
Prechtel Kopernikusstrasse 9 Postfach 86 08
20
W-8000 München 86(DE)**

## Description

The present invention relates to a method for reduction of the nitrogen oxide content, especially nitrogen dioxide, in effluent gases from an absorption column for manufacture of nitric acid by countercurrent absorption of nitrogen oxides produced by catalytic oxidation of ammonia by air or oxygen enriched air, in water or diluted nitric acid at a total pressure between 300 and 3000 kPa. The column is divided in a number of stages by horizontal perforated plates where the nitrogen oxides in the gases are partly absorbed. There is a free gas volume above these plates where the nitrogen monoxide (NO) partially reacts with oxygen to nitrogen dioxide ($NO_2$). Cooling is provided on at least some of the plates. The remaining gas from the uppermost absorption stage will, after having been heated, pass through an expansion turbine for recovering pressure energy before the gases are discharged to the atmosphere.

The invention also comprises an apparatus for manufacture of nitric acid, comprising an absorption column having horizontal plates, with a certain level of liquid, and a gas volume, i.e. oxidation volume between the plates for oxidation of NO to $NO_2$. The apparatus also comprises means for supply of nitrogen oxide containing gases in the lower part of the column and an aqueous solution in the upper part of the column and discharge means for the gas from the semispherical top of the column.

Nitric acid is made from the reaction products of combustion of ammonia with air or oxygen enriched air. Accordingly, one has a gas containing different nitrogen oxides, oxygen and inert gases. When this gas mixture is brought in contact with an aqueous nitric acid containing solution, nitric acid is formed as the nitrogen oxides, primarily $NO_2$ or $N_2O_4$ are absorbed and react with water. This reaction results in formation of NO which must be oxidized to $NO_2$. The reaction velocity is proportional to the pressure to the power of 2 to 3. A simplified gross reaction in the column can be stated as:

1.  $2\,NO + O_2 \rightarrow 2\,NO_2$
2.  $3\,NO_2 + H_2O \rightarrow 2\,HNO_3 + 2\,NO$

NO is accordingly formed during the whole absorption process on the plates and in the subsequent oxidation space it will be partly oxidized to $NO_2$. In older plants, where emission regulations were not as strict as today, at least 90% of the absorption of the nitric gases would take place in the lowest 2/3 of the column, while the remaining absorption took place in the upper third. During manufacture of nitric acid quite large losses, for instance 2000 ppm, of nitrogen oxides in the effluent gases could be allowed if only economic considerations were made. But in view of environmental requirements the content of nitrogen oxide in the effluent gases should be kept as low as possible, and the limit in most of the industrialized countries today is 200 ppm nitrogen oxides. In addition to the requirement regarding low total emission of nitrogen oxide ($NO_x$) it is desired to have an effluent gas being as colourless as possible. It is $NO_2$ which gives the effluent gases colour, and therefore it is not only the total content of nitrogen oxide which is of interest, but also the relative amount of $NO_2$ and NO in the effluent gases. Colourless gas is defined by the "stack formula":

$$\text{ppm } NO_2 \text{ in effluent gas} \leq \frac{61}{D}$$

D is the stack diameter in meter.

The most economical way of manufacturing nitric acid and at the same time trying to meet the emission requirements set by the environmental authorities, can be carried out in different ways. Modern plants usually apply absorption under pressure, for instance 300-3000 kPa (3-30 bar) in plate columns where cooling is provided on several of the plates. Several different types of plates are used, and in the following the concept "plate" comprises usually used perforated plates or bubble cap plates.

During manufacture of nitric acid the gases usually pass countercurrently to the absorption liquid and leave the column at its upper semispherical top. Such a column is for instance described in Ullmann Encyklopädie der technischen Chemie, 4. Auflage, Band 20, pp 306-331.

More specific ways of reducing the emission of nitrogen oxides are application of chemicals, for instance alkalic absorption using $Na_2O$ which is added as NaOH or $Na_2CO_3$.

Further, Norwegian Patent No. 139.633 describes a method by which $H_2O_2$ is added in order to secure oxidation of NO to $NO_2$ and further to $HNO_3$.

GB 527037 relates to manufacture of nitric acid, particularly oxidation of NO to $NO_2$, and in that connection regulating the reaction spaces such that when the gases are meeting $HNO_3$ stronger than that which produces a maximum of $NO_2$ absorption, they are oxidized for periods of time which progressively increase along the series as the strength of $HNO_3$ increases. Such regulation alone will not result in a colour free effluent gas having less than 200 ppm $NO_x$ and is also quite different from the present process.

From US-patent No. 4,372,935 it is known to reduce the $NO_x$-content in the gases discharged to the atmosphere from a nitric acid plant by increasing the liquid level on the plates in part of the absorption tower. In a tower having 50 plates the liquid level on the 20 last plates is increased, while the distance between the plates is constant. Thus the $NO_x$-content of effluent gas was reduced to 376 vpm compared to 968 vpm for a known absorption tower having the same liquid level on all plates. The increased contact time for the $NO_x$-containing gases with the liquid obviously will increase the total absorption of $NO_x$, but this method does not describe how the $NO/NO_2$ ratio in the effluent gases can be regulated for obtaining colourless gases from a nitric acid plant.

The object of the present invention was to reduce the emission of nitrogen oxides from pressure absorption plants comprising plate column, but without addition of extra chemicals, and simultaneously obtain an effluent gas being as colourless as possible. Another object was to arrive at an improved absorption column for carrying out the method.

Manufacture of nitric acid comprises several parameters both for the gas and the liquid phase which must be considered. The technical requirement will be:

a) acid having a desired strength and

b) the emissions shall be within the requirement set by the environmental authorities.

The economic requirement can simply be divided in investment and production requirements. The price of the column will for instance increase by its height and number of horizontal plates, but in general increased height and number of plates will result in better absorption of nitrogen oxides.

It is evident that the complicated chemical and physical conditions present, in addition to the economic requirements, will result in compromises between strong reduction of emission and economical performance of the plant.

The inventors started by studying a conventional modern nitric acid column from which the emission was close to the present environmental requirements. The first question raised was whether the investment cost could be lower without substantially increasing the running cost, and at the same time keep the emission constant or lower. As the absorption of nitrogen oxide actually implies absorption of $NO_2$, it is accordingly important that efficient absorption of $NO_2$ is secured as soon as NO is oxidized. One has to make certain that as much as possible of the NO content of the gases becomes oxidized to $NO_2$. A central parameter during absorption is the available contact area between gas and liquid. A large contact area can be obtained by using a column having several plates with a high liquid level, but as mentioned above, increase of the height of the column and/or increasing number of plates will increase the cost of the column. The distance between the plates must also be large enough for making a necessarily large oxidation volume such that oxidation of NO to $NO_2$ between each absorption stage is obtained. One should also secure that the pressure drop over the column does not increase substantially, as this will increase the running cost because then only a minor part of the compression energy can be recovered in the expansion turbine.

By evaluation of the relative importance of each parameter and the partly conflicting considerations which have to be done, one will end up with compromises, and several such ones are known. The inventors, however, chose an isolated investigation of available contact area between gas and liquid. Further studies of this showed that even a small increase of the liquid level on the plates could give positive effect totally and reduce the emission of nitrogen oxides substantially. Especially high effect was achieved by increasing the liquid level on the upper plates in the column. Then the oxidation space between these plates became less, but this did not result in determining reduction of the oxidation of NO to $NO_2$. By increasing the liquid level on the three upper plates, one obtained for instance far lower $NO_2$-concentration in the effluent gases compared to a conventional column. The relative amounts of $NO_2$ were also less as larger amounts of $NO_2$ were absorbed on the last plate than on one having half the liquid level.

The relative amount $NO_2$ could be reduced further by reduring the oxidation space above the last plate. A conventional absorption column has a semispherical top and thereby a relatively large oxidation space above the last plate is formed. From an environmental point of view the only effect thereby attained is that a large part of the remaining NO is oxidized to $NO_2$, resulting in extra colour of the effluent gases. The inventors found that the oxidation space could be reduced without disturbing the performance of the column by putting in an extra non-perforated plate in the top of the column above the last absorption level. Said plate can be horizontal, conical or curved and have a necessary free passage for gas to allow equalization of the pressure difference over the plate. The effluent gases can then be transported out of the column by a gas pipe through the partly closed top space. A pressure relieved dead space is thereby obtained at the column's top, and this does not lead to undesired oxidation of the remaining NO in the effluent gases.

The idea of increasing the contact area gas/liquid was further developed and it was found that one could obtain cleaner effluent gases having relatively low content of $NO_2$ by increasing the liquid level on the plates. This would not disturb the performance of the column, and a column having fewer plates would be provided. An alternative way of increasing the contact area would be to apply more plates in the upper part of the column, but with a normal liquid level. One would also then obtain a lower column, but the number of plates would be higher compared to a column having increased liquid level. As more plates increase the investment costs, this solution would in most cases be less favourable economically.

The special features of the invention are as defined in the attached claims 1-4.

The invention will be further explained in connection with the description of the figures and the examples.

Fig. 1      shows a known absorption column for manufacture of nitric acid.

Fig. 2      shows the upper part of a column according to the invention.

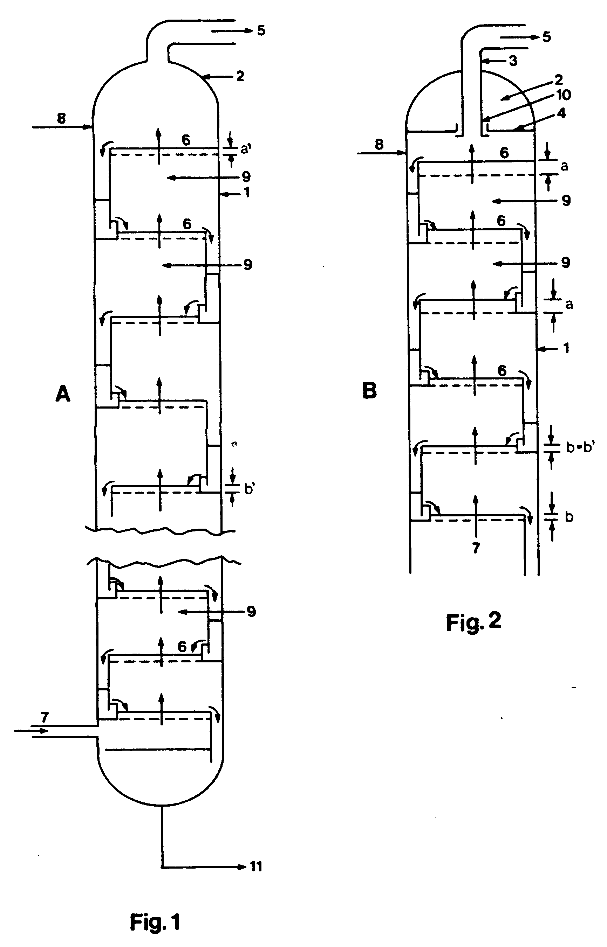

In Fig. 1 is shown a conventional column 1 with an upper part A for manufacture of nitric acid by absorption of nitrogen oxides in an aqueous nitric acid containing solution. Nitrogen oxide containing gases 7 from a plant for catalytic oxidation of ammonia are supplied to the lower part of column 1 countercurrently to the absorption liquid 8. The effluent gases containing non-absorbed nitrogen oxides leave the column 1 through discharge means 5. The upper part 2 of the column above the last plate 6 is semispherical. The six upper plates 6 are shown on the figure. On each plate is a liquid level having a height a'. The absorption liquid flows downwards from plate to plate as shown. Between each plate 6 there is an oxidation space 9. The distances between all plates are the same and the liquid level a' on the upper plates is the same as the level b' on the plates further down. Product acid is delivered through the acid outlet 11.

Fig. 2 shows the upper part B of a column 1 according to the invention. Above the inlet for absorption liquid 8 there is a plate 4 which separates the upper semispherical part 2 of the column from the oxidation space 9 above the upper plate 6 with liquid level a. A pipe 3 allows the effluent gases to leave the upper oxidation space 9 directly out of the column 1. Between the pipe 3 and the plate 4 there are openings 10 whereby communication between the spaces 2 and 9 is provided such that a pressure relieved dead space in the upper part of the column 1 is attained.

On the upper plates 6 there is a liquid level a, while the plates 6 further below have a liquid level b. The height of the level a>b. This change of the height of liquid level on the plates relative to a conventional column results in an increase in contact area for absorption of nitrogen oxides. The relation between this contact area and the free gas space for oxidation in the upper 1-8 stages of the column is hereby increased by a factor of 1,5-5 compared to the plates further below where the liquid level is b. It has been found that if the liquid level on the upper 2-4 plates is increased by a factor of 2-3 compared to the plates 6 further below, a substantial reduction of emission of nitrogen oxides is obtained. Almost the same effect can be attained if the contact area is increased by installing several extra plates 6 in the upper part of the column, but then with a liquid level b. The contact area might be stated as the liquid volume on each plate times number of plates. The number of oxidation spaces 9 will also increase, but each space will be smaller and the total oxidation space available will only be reduced unessentially. In a conventional column the height of the oxidation spaces 9 is about 3 m, while the liquid level on the plates 6 is about 20 cm. Installation of more plates 6 or increase of the liquid level a, will accordingly result in small changes of the available oxidation space.

Example 1

This example shows manufacture of nitric acid in a conventional pressure absorption column having a distance between the plates of 3,3 m and a liquid overflow height of 0,2 m. The gas load was 200000 $Nm^3/h$ and the diameter of the column was 6 m. The stack diameter was 1,5 m. Recordings were made on the upper 18 plates as it is only absorption on the upper plates of the column (part A, Fig. 1) which here is of interest. Each stage in the column comprises a horizontal plate with a liquid level and the subsequent oxidation volume up to the next plate.

The nitrogen oxide containing gas leaving stage No. 30 (i.e. the gas in on plate No. 31) had a total pressure of 10,2 bar under the given conditions (that is 20°C and 2,5 volume% $O_2$) and a content of nitrogen oxides ($NO_x$) of 200 ppm out of which 85 ppm was $NO_2$. Analysis of the gases leaving the remaining stages gave the following results:

Tabel 1

| Stage N | ppm $NO_x$ | ppm $NO_2$ | Pressure (bar) kPa |
|---------|------------|------------|---------------------|
| N = 30 | 200 | 85,0 | (10,20) 1020 |
| N = 40 | 122 | 47,0 | (10,02) 1002 |
| N = 48 | 93 | 39,0 | ( 9,87) 987 |

Not till after 48 stages did the effluent gas become colourless, as its content of $NO_2$ was under 40 ppm in accordance with the above "stack formula".

Example 2

This example shows the effect of increasing the contact area during the absorption.
First the liquid level on plates Nos. 38, 39 and 40 was increased to 0,4 m. This gave the following analysis of the gases leaving after stage No. 41:

| Stage | $NO_x$ | $NO_2$ | Pressure (bar) kPa |
|-------|--------|--------|---------------------|
| 41 | 114 | 41 | (9,97) 997 |

Without this increase of liquid level it would have been necessary to use 46,5 stages for obtaining correspondingly low $NO_2$-amounts in the effluent gas.
If in addition to increasing the liquid level, the oxidation space is also reduced above the upper plate by separation of the upper part of the tower as shown on Fig. 2 and equivalent to a reduction of free height above the upper plate from 3,3 m to 1,95 m, the relative amounts of $NO_2$ in effluent gas were reduced as follows:

| Stage | $NO_x$ | $NO_2$ | Pressure (bar) kPa |
|-------|--------|--------|---------------------|
| 40 | 114 | 38 | (9,97) 997 |

In this way it was already by 40 plates achieved a colourless effluent gas.

Example 3

This example shows the effect of increasing the contact area during absorption by increasing the number of plates in the upper part of the column. The liquid level on each plate was 0,2 m.
Between plates Nos. 37, 38, 39 and 40 it was installed altogether three extra plates such that the oxidation spaces between the plates were reduced by about 50%. The height of the column was unchanged, but the total number of plates was increased to 43. Also in this case the upper part of the column was separated corresponding to a difference between the upper plate 43 and the separating plate of 1,75 m. Analysis of the effluent gases leaving the column gave the following result:

| Stage | $NO_x$ | $NO_2$ | Pressure (bar) kPa |
|-------|--------|--------|---------------------|
| 43 | 115 | 39 | (9,96) 996 |

As can be seen from the table installation of three extra plates gave almost the same effect as doubling the liquid level on the three upper plates.
The pressure drop due to these small changes will be immaterial compared to that resulting from increasing the liquid level on the 20 last plates as recommended in the above referred US-patent 4,372,935.
By the small changes of the contact area, which do not disturb the performance of the absorption column, one has by the present invention obtained reduction of $NO_x$-emission at the same time as the effluent gases become substantially colourless. One has also obtained an improved column which totally requires smaller investment than a conventional column giving the same $NO_x$-emission.

**Claims**

1. Method for reducing the total content of nitrogen oxide ($NO_x$) below 200 ppm and simultaneously reducing especially nitrogen dioxide, in effluent gases from an absorption column for manufacture of nitric acid by countercurrent absorption of nitrogen oxides formed by catalytic oxidation of ammonia and air or oxygen enriched air, in water or diluted nitric acid at a total pressure between 3 and 30 bar, where the column is divided into a number of stages by horizontal perforated plates, of which at least some are provided with cooling, where in the free gas space above these plates nitrogen monoxide partially reacts with oxygen to form nitrogen dioxide, and where the remaining gases from the upper absorption stage after heating leave the column through an expansion turbine for recovering the pressure energy before the gases are discharged to the atmosphere,
**characterized in that**
the absorption in the upper 1-8 stages is carried out at a relation between the contact area in the liquid level for absorption on the plates and the free gas space for oxidation which is 1.5-5 times as large as the corresponding relation for the horizontal plates below stage 8, and that said relation is adjusted either by increasing the overflow height for the liquid volume on the upper 1-8 plates by a factor of 1.5-5, compared to the plates further below having the same liquid level on all plates or by reducing the distances between said plates by a factor of 1.5-3 compared to the plates further below and that the amount of $NO_2$ in the effluent gas in ppm $\leq \frac{61}{D^1}$ , where D is the stack diameter in meters.

2. Method according to claim 1,
**characterized in that**
the volume above the upper plate is reduced by closing off a dead space and that the pressure difference between said space and the space below said plate can be relieved by means of communication openings in a non-perforated plate at the top of the column separating the dead space.

3. Apparatus for manufacture of nitric acid according to claims 1-2, comprising an absorption column 1 having horizontal plates (6) with a liquid level (a,b) and oxidation spaces (9) between the plates (6), means for supplying nitrogen oxide containing gas (7) to the lower part of the column (1) and an aqueous solution (8) to the upper part of the column (1) and effluent gas discharge means (5) from the top of the column which has a semispherical space (2),
**characterized in that**
the relation between available contact area for absorption on the plates (6) and total free gas space (9) for oxidation at the upper 1-8 stages of she column is 1.5-5 times larger than in the lower part of the column (1) and is either adjusted by increasing the liquid level (a) of the overflow height on the upper 1-8 plates (6) in the column (1) to 1.5-5 times the liquid level (b) on the plates (6) further below or by having a liquid level (a) of the same height on all plates (6) and having a distance (c) between the upper 1-8 plates (6) of 1/3-2/3 of the distance (c) between the plates further below.

4. Apparatus according to claim 3,
**characterized in that**
the semispherical volume (2) of the column (1) is separated from the upper oxidation volume (9) by a non-perforated plate (4), and having such communication between the two volumes that pressure equalization is provided for via openings (10) between the plate (4) and a pipe (3) for transporting the effluent gases out of the column (1).

**Patentansprüche**

1. Verfahren zur Reduzierung des Gesamtgehaltes an Stickoxid ($NO_x$) unter 200ppm und zur gleichzeitigen Verringerung insbesondere von Stickstoffdioxid, in Abgasen einer Absorptionssäule zur Herstellung von Salpetersäure durch Gegenstrom-Absorption von durch katalytische Oxydation von Ammoniak und Luft oder Sauerstoff angereicherter Luft entstandenen Stickoxiden in Wasser oder verdünnter Salpetersäure bei einem Gesamtdruck zwischen 3 und 30 bar, wobei die Säule in eine Anzahl von Stufen durch horizontale perforierte Platten unterteilt ist, von denen wenigstens einige gekühlt sind, wobei in dem freien Gas-raum über diesen Platten Stickstoffmonoxid teilweise mit Sauerstoff reagiert, um Stickstoffdioxid auszubilden, und wobei die verbleibenden Gase aus der oberem Absorptionsstufe nach Aufheizen die Säule durch eine Expansionsturbine, um die Druckenergie, bevor die Gase in die Umgebung entlassen werden, wiederzugewinnen, verlassen

6

**dadurch gekennzeichnet,** daß

die Absorption in den oberen 1-8 Stufen bei einem Verhältnis zwischen dem Kontaktbereich zur Absorption in dem Flüssigkeitsstand auf den Platten und dem freien Gasbereich zur Oxydation ausgeführt wird, das 1,5 bis 5 mal so groß ist, wie das entsprechende Verhältnis der horizontalen Platten unterhalb Stufe 8, daß das Verhältnis entweder durch Erhöhung der Überlaufhöhe des Flüssigkeitsvolumen auf den oberen 1 bis 8 Platten um einen Faktor von 1,5 bis 5, verglichen mit den weiter unten liegenden Platten, die denselben Flüssigkeitsspiegel auf allen Platten besitzen oder durch Reduktion der Abstände zwischen den Platten um einen Faktor von 1,5 bis 3 verglichen mit den weiter unten liegenden Platten eingestellt wird, und daß die Menge an $NO_2$ in dem Abgas in ppm $\leq 61/D$ ist, wobei D der Stapel-Durchmesser in Meter ist.

**2.** Verfahren nach Anspruch 1,
**dadurch gekennzeichnet,** daß

das Volumen über der oberen Platte durch Abtrennen eines Tot-Raums reduziert wird, und daß die Druckdifferenz zwischen diesem Bereich und dem Bereich unter der Platte durch Verbindungsöffnungen in einer nicht perforierten Platte an der Spitze der Säule, die den Tot-Raums abtrennt, abgebaut werden kann.

**3.** Vorrichtung zur Herstellung von Salpetersäure nach einem der Ansprüche 1 bis 2, umfassend eine Absorptionssäule (1), die horizontale Platten (6) mit einem Flüssigkeitsspiegel (a, b) und Oxidationsbereiche (9) zwischen den Platten (6) besitzt, Mittel, um Stickoxid enthaltendes Gas (7)in den unteren Bereich der Säule (1) und eine wässrige Lösung (8) in den oberen Teil der Säule (1) einzubringen und Abgas-Ablaßmittel (5) an der Spitze der Säule, die einen halb-kugelförmigen Bereich (2) besitzt,
**dadurch gekennzeichnet,** daß

das Verhältnis zwischen dem verfügbaren Kontaktbereich zur Absorption auf den Platten (6) und gesamten freien Gasbereich (9) zur Oxydation bei den oberen 1 bis 8 Stufen der Säule 1,5 bis 5 mal größer als in dem unteren Teil der Säule (1) ist und durch entweder Erhöhung des Flüssigkeitsstandes (a) der Überlaufhöhe auf den oberen 1 bis 8 Platten (6) in der Säule (1) auf 1,5 bis 5 mal des Flüssigkeitsstandes (b) auf den Platten (6) weiter unten, oder indem bei gleichem Flüssigkeitsstand (a) auf allen Platten (6) der Abstand (c) zwischen den oberen 1 bis 8 Platten (6) auf 1/3 bis 2/3 des Abstandes (c) zwischen den weiter unten befindlichen Platten eingestellt wird.

**4.** Vorrichtung nach Anspruch 3,
**dadurch gekennzeichnet,** daß

der halbkugelförmige Bereich (2) der Säule (1) von dem oberen Oxidationsbereich (9) mittels einer nichtperforierten Platte (4) getrennt ist, und solch eine Verbindung zwischen den beiden Bereichen besitzt, daß Druckausgleich via Öffnungen (10) zwischen der Platte (4) und einem Rohr (3) zum Transport der Abgase aus der Säule (1) zur Verfügung gestellt ist.

**Revendications**

**1.** Procédé pour réduire au-dessous de 200 ppm (parties par million) la teneur totale en des oxydes de l'azote ($NO_x$) et pour réduire simultanément, notamment, le bioxyde d'azote, dans des gaz sortant d'une colonne d'absorption pour la fabrication d'acide nitrique par absorption à contre-courant des oxydes de l'azote formés par oxydation catalytique de l'ammoniac et d'air ou d'air enrichi en oxygène, dans de l'eau ou dans de l'acide nitrique dilué, à une pression totale comprise entre 3 et 30 bars, procédé dans lequel la colonne est divisée en un certain nombre d'étages par des plateaux perforés horizontaux, dont certains au moins comportent des organes de refroidissement, et dans lequel, dans l'espace libre pour gaz, situé au-dessus de ces plateaux, le monoxyde d'azote réagit partiellement avec l'oxygène pour former du bioxyde d'azote, et les gaz résiduels provenant de l'étage supérieur d'absorption quittent, après chauffage, la colonne en passant par une turbine de détente pour permettre de récupérer l'énergie de compression avant la décharge des gaz à l'atmosphère, procédé caractérisé en ce que l'absorption est réalisée dans les 1 à 8 étages supérieurs avec un rapport entre la surface de contact au niveau du liquide pour l'absorption sur les plateaux et l'espace contenant des gaz libres pour l'oxydation, supérieur de 1,5 à 5 fois au rapport correspondant dans le cas des plateaux horizontaux inférieurs au plateau n° 8, et en ce qu'on ajuste ledit rapport en augmentant, sur les plateaux 1 à 8 supérieurs, la hauteur de débordement du volume liquide d'un facteur de 1,5 à 5, en comparaison des plateaux situés plus bas et ayant le même niveau de liquide sur tous les plateaux, ou bien en diminuant la distance entre lesdits plateaux, la diminution étant d'un facteur de 1,5 à 3 en comparaison des plateaux situés plus bas, et en ce que la quantité de $NO_2$ dans le gaz effluent est, en ppm, inférieure ou égale à $\frac{61}{D}$, relation dans laquelle D désigne le diamètre de la cheminée, en mètres.

2. Procédé selon la revendication 1, caractérisé en ce que le volume situé au-dessus du plateau supérieur est diminué par la fermeture d'un espace mort et en ce que la différence de pression entre ledit espace et l'espace situé au-dessous dudit plateau peut être abaissée grâce à des ouvertures de communication ménagées dans une plaque non perforée située au sommet de la colonne en séparant l'espace mort.

3. Appareil pour fabriquer de l'acide nitrique selon les revendications 1 ou 2, cet appareil comprenant une colonne (1) d'absorption ayant des plateaux (6) horizontaux présentant un niveau (a, b) de liquide et des espaces (9) pour l'oxydation entre les plateaux (6), un dispositif destiné à alimenter en du gaz (7), contenant des oxydes de l'azote, la partie inférieure de la colonne (1) et pour alimenter en une solution aqueuse (8) la partie supérieure de la colonne (1), et un dispositif (5) de décharge des gaz effluents provenant du sommet de la colonne et qui comporte un espace (2) hémisphérique, appareil caractérisé en ce que le rapport entre la surface de contact disponible pour l'absorption sur les plateaux (6) et l'espace libre (9) total pour les gaz, en vue de leur oxydation, aux étages 1 à 8 supérieurs de la colonne, est supérieur de 1,5 à 5 fois au rapport existant à la partie inférieure de la colonne (1) et en ce qu'on ajuste la hauteur du débordement, sur les 1 à 8 plateaux (6) supérieurs de la colonne (1) en élevant le niveau (a) de liquide de manière à obtenir un niveau représentant 1,5 à 5 fois le niveau de liquide (b) sur les plateaux (6) immédiatement inférieurs ou en ayant un niveau de liquide (a) de la même hauteur sur tous les plateaux (6) et en ayant une distance (c) entre les plateaux 1 à 8 supérieurs (6) représentant de 1/3 à 2/3 de la distance (c) séparant les plateaux plus inférieurs.

4. Appareil selon la revendication 3, caractérisé en ce que le volume hémisphérique (2) de la colonne (1) est séparé, par un plateau (4) non perforé, du volume (9) supérieur destiné à l'oxydation, et en ce que la communication entre les deux volumes est assurée, pour l'égalisation des pressions, par des ouvertures (10) situées entre le plateau (4) et un tube (3) destiné à transporter les gaz effluents pour les faire sortir de la colonne (1).

Fig. 1

Fig. 2